# EUROPÄISCHE PATENTSCHRIFT

(11) **EP 1 387 952 B1**
(45) Veröffentlichungstag und Bekanntmachung des Hinweises auf die Patenterteilung: **30.05.2007**
(21) Anmeldenummer: 02742724.4
(22) Anmeldetag: 08.05.2002
(51) Int. Cl.: F02M 61/18, F02M 69/04

(54) **BRENNSTOFFEINSPRITZSYSTEM**
FUEL INJECTION SYSTEM
SYSTEME D'INJECTION DE CARBURANT

(30) Priorität: 09.05.2001 DE 10122352
(43) Veröffentlichungstag der Anmeldung: 11.02.2004
(73) Patentinhaber: ROBERT BOSCH GMBH, 70442 Stuttgart (DE)
(72) Erfinder: WÜRFEL, Gernot, 71665 Vaihingen/Enz (DE)
(74) Vertreter: Körfer, Thomas
(86) Internationale Anmeldenummer: PCT/DE2002/001660
(87) Internationale Veröffentlichungsnummer: WO 2002/090763

(56) Entgegenhaltungen:
- DE-A- 10 026 321
- DE-C- 19 642 653
- US-B1- 6 186 418
- PATENT ABSTRACTS OF JAPAN vol. 2000, no. 16, 8. Mai 2001 (2001-05-08) & JP 2001 027170 A (NISSAN MOTOR CO LTD), 30. Januar 2001 (2001-01-30)
- PATENT ABSTRACTS OF JAPAN vol. 1998, no. 05, 30. April 1998 (1998-04-30) & JP 10 008969 A (NISSAN MOTOR CO LTD), 13. Januar 1998 (1998-01-13)

## Beschreibung

### Stand der Technik

Die Erfindung geht aus von einem Brennstoffeinspritzsystem nach der Gattung des Hauptanspruchs.

Bei gemischverdichtenden, fremdgezündeten Brennkraftmaschinen mit innerer Gemischbildung ist für den Schichtladebetrieb im Zündkerzenbereich eine "Gemischwolke" erforderlich, die ein bestimmtes Brennstoff-Luftverhältnis im zündfähigen Bereich aufweist. Zu diesem Zweck werden Brennstoffeinspritzventile mit Düsen eingesetzt, die nach innen oder nach außen öffnen und einen Kegelstrahl erzeugen.

Beispielsweise ist aus der DE 198 04 463 A1 ein Brennstoffeinspritzsystem für gemischverdichtende, fremdgezündete Brennkraftmaschinen bekannt, welches mit wenigstens einem Brennstoffeinspritzventil, das Brennstoff in einen von einer Kolben-/Zylinder-Anordnung gebildeten Brennraum einspritzt und mit einer in den Brennraum ragenden Zündkerze versehen ist. Der Düsenkörper des Brennstoffeinspritzventils ist dabei mit wenigstens einer Reihe über den Umfang des Düsenkörpers verteilt angeordneten Einspritzlöchern versehen. Durch eine gezielte Einspritzung von Brennstoff über die Einspritzlöcher wird ein strahlgeführtes Brennverfahren durch Bildung einer Gemischwolke realisiert, wobei wenigstens ein Strahl in Richtung auf die Zündkerze oder deren unmittelbarer Umgebung gerichtet ist. Weitere Strahlen sorgen dafür, daß eine wenigstens annähernd geschlossene bzw. zusammenhängende Gemischwolke gebildet wird.

Nachteilig an dem aus der DE 198 04 463 A1 ist insbesondere die mangelhafte Ausnutzung des zur Verfügung stehenden Brennraums, woraus eine minderwertige Gemischbildung durch einen zu hohen Luftanteil und in der Folge überhöhte Emissionen von unverbrannten Kohlenwasserstoffen, verursacht durch einzelne Verbrennungsaussetzer, sowie ein erhöhter Brennstoffverbrauch resultieren.

In der JP 2001 027170 ist ein Brennstoffeinspritzsystem beschrieben, bei welchem eine Zündkerze in einem Zentrum einer Verbrennungskammer angeordnet ist und bei welchem ein Brennstoffeinspritzventil den Brennstoff in die Verbrennungskammer zwischen zwei Einlassventilen einspritzt. Ein Teil des Brennstoffstrahls weist in der axialen. Richtung des Brennstoffeinspritzventils eine elliptische Form auf, wobei die Hauptlängsachse in der axialen Richtung des Zylinders verläuft, während eine weitere Hauptquerachse orthogonal zu der Achse des Zylinders verläuft.

In der DE 196 42 653 C1 ist ein Brennstoffeinspritzsystem beschrieben, bei dem das Injektor eine Kegelförmige Gemischwolke mit Kreisförmigem Querschnitt erzeugt.

### Vorteile der Erfindung

Das erfindungsgemäße Brennstoffeinspritzsystem mit den kennzeichnenden Merkmalen des Hauptanspruchs hat demgegenüber den Vorteil, daß durch die unterschiedlich starke Aufweitung der in den Brennraum eingespritzten Gemischwolke in einer Längs- und einer Querrichtung der Brennkraftmaschine und die daraus resultierende elliptische Querschnittsform der Gemischwolke eine bessere Anpassung der Gemischwolke an die Form des Brennraums und damit eine effektivere Verbrennung, ein niedrigerer Brennstoffverbrauch und eine geringere Schadstoffemission erzielbar sind.

Durch die in den Unteransprüchen aufgeführten Maßnahmen sind vorteilhafte Weiterbildungen des im Hauptanspruch angegebenen Brennstoffeinspritzsystems möglich.

Von Vorteil ist insbesondere, daß die Thermoschockbelastung und die Verrußung der Zündkerze durch das auf die Zündkerzenposition bezogene tangentiale Einspritzen von Brennstoff vermindert werden, da die Einspritzstrahlen nicht direkt auf die Zündkerze gerichtet sind.

Vorteilhafterweise kann durch eine gezielte Anordnung der Einspritzlöcher und damit der Einspritzstrahlen im Brennraum auch die Einbaulage der Ein- und Auslaßventile sowie der Zündkerze im Zylinderkopf berücksichtigt werden und trotzdem die Geometrie des Brennraums optimal genutzt werden.

Die für das Brennstoffeinspritzsystem geeigneten Brennstoffeinspritzventile können vorteilhafterweise ohne zusätzlichen Fertigungsaufwand kostengünstig hergestellt werden.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: einen schematischen Schnitt durch ein Ausführungsbeispiel einer Brennkraftmaschine mit einem erfindungsgemäß ausgestalteten Brennstoffeinspritzsystem,
- Fig. 2A-B: einen schematischen Schnitt in einer Längsrichtung und in einer Querrichtung durch die Brennkraftmaschine und das erfindungsgemäße Brennstoffeinspritzsystem, und
- Fig. 3: einen schematischen Schnitt durch die in einem Brennraum der Brennkraftmaschine erzeugte Gemischwolke.

### Beschreibung des Ausführungsbeispiels

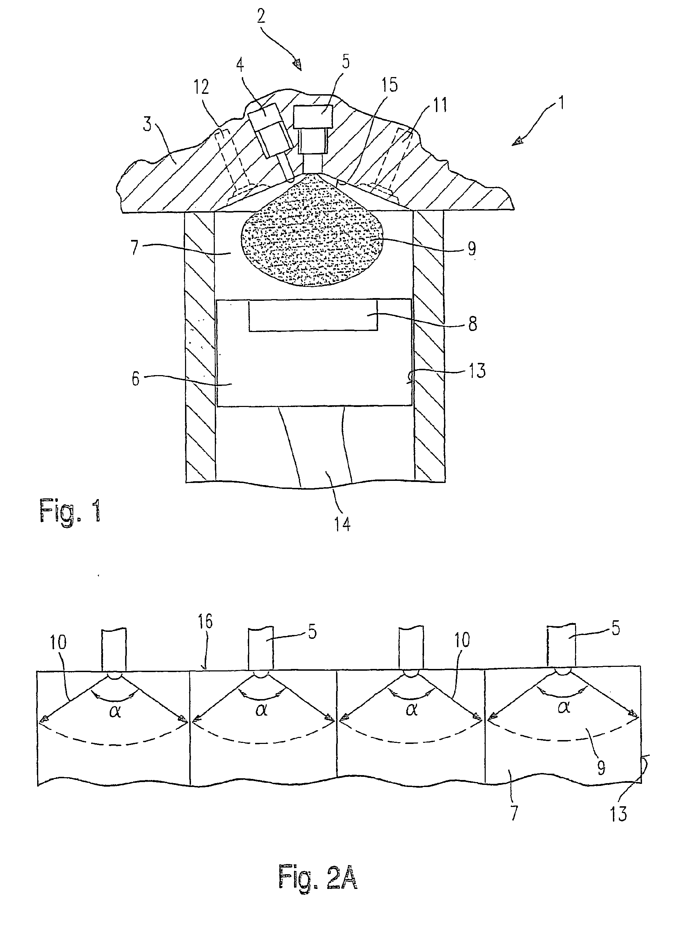

Fig. 1 zeigt in einer ausschnittsweisen Schnittdarstellung ein Ausführungsbeispiel einer Brennkraftmaschine 1 mit einem erfindungsgemäßen Brennstoffeinspritzsystem 2.

Das Brennstoffeinspritzsystem 2 umfaßt einen Zylinderblock mit einer Zylinderwandung 13, in welcher ein Kolben 6 geführt ist. Der Kolben 6 wird durch eine Pleuelstange 14 an der Zylinderwandung 13 auf- und abgeführt. Die Zylinderwandung 13 ist endseitig durch einen Zylinderkopf 3 abgeschlossen. Die Zylinderwandung 13, der Kolben 6 und der Zylinderkopf 3 schließen einen Brennraum 7 ein.

Im Zylinderkopf 3 ist ein Brennstoffeinspritzventil 5 zentriert angeordnet. Etwas seitlich versetzt ist eine Zündkerze 4 in eine Bohrung des Zylinderkopfes 3 eingefügt. Weiterhin sind zumindest ein Einlaßventil 11 und zumindest ein Auslaßventil 12 vorhanden.

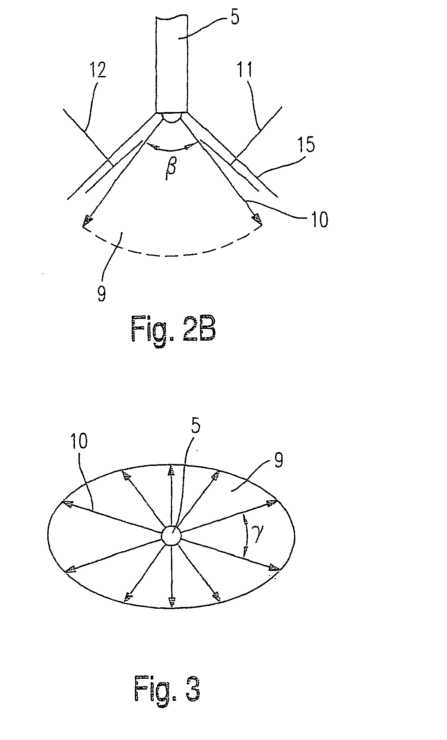

Beim im Betrieb befindlichen Brennstoffeinspritzsystem 2 werden durch im Brennstoffeinspritzventil 5 vorhandene Abspritzöffnungen Einspritzstrahlen 10, welche insgesamt einen kegelförmiger Brennstoffstrahl, bilden, in den Brennraum 7 eingespritzt. Durch Vermischung von Brennstoff und Luft im Brennraum 7 wird eine Gemischwolke 9 gebildet. Die Gemischwolke 9 wird durch die Zündkerze 8 gezündet. Die erfindungsgemäße Form des kegelförmigen Brennstoffstrahls wird anhand der Figuren 2 und 3 näher erläutert.

Aus Fig. 1 ist ersichtlich, daß der Brennraum 7 der Brennkraftmaschine 1 in Form eines Dachbrennraums 7 im Zylinderkopf 3 ausgeführt ist, welcher Firstschrägen 15 und einen First 16 aufweist. Am First 16 ist das Brennstoffeinspritzventil 5 angeordnet, während in den Firstschrägen 15 die Gaswechselventile 11 und 12 angeordnet sind. Dies ist besonders beim Einsatz von mehr als zwei Gaswechselventilen 11, 12 vorteilhaft, da so im Vollastbetrieb der Brennkraftmaschine 1 diese besser mit Luft versorgt wird.

Um nun den Brennraum 7 optimal ausnutzen zu können und der Lage der Ein- und Auslaßventile 11, 12 Rechnung zu tragen, ist erfindungsgemäß vorgesehen, das Brennstoffeinspritzventil 5 so zu gestalten, daß die vom Brennstoffeinspritzventil 5 in den Brennraum 7 eingespritzten Einspritzstrahlen 10 in einer Längsrichtung der Brennkraftmaschine 1 unter einem größeren Winkel eingespritzt werden als in einer Querrichtung der Brennkraftmaschine 1.

In Fig. 2A ist zur Verdeutlichung dieser Maßnahme ein stark schematisierter Längsschnitt durch eine beispielhafte Brennkraftmaschine 1 mit vier Zylindern dargestellt, während Fig. 2B einen Schnitt in einer Querrichtung der Brennkraftmaschine 1 durch einen der Zylinder zeigt.

Wie in Fig. 2A erkennbar, werden die Einspritzstrahlen 10 mittels des Brennstoffeinspritzventils 5 unter einem maximalen Öffnungswinkel α eingespritzt. Dieser ist durch die Stellung der Abspritzöffnungen des Brennstoffeinspritzventils 5 bestimmt.

In einer Querrichtung der Bretinkraftmaschine 1 werden die Einspritzstrahlen 10, wie in Fig. 2B dargestellt, gemäß den Firstschrägen 15, welche den Brennraum 7 begrenzen, unter einem Winkel β eingespritzt, welcher kleiner als der Winkel α ist. Die Gaswechselventile 11 und 12 sowie die in Fig. 2B nicht dargestellte Zündkerze 4 werden somit nur tangential von den Einspritzstrahlen 10 gestreift und nicht direkt angespritzt. Dies ist insbesondere bei der Zündkerze 4 von Vorteil, da auf diese Weise die Thermoschockbelastung sowie die Verkokung der Elektroden vermindert und die Lebensdauer der Zündkerze 4 verlängert werden kann.

Betrachtet man einen Querschnitt durch die eingespritzte Gemischwolke 9, erkennt man die elliptische Form, welche durch die unterschiedlich großen Öffnungswinkel α und β in zwei zueinander orthogonalen Raumrichtungen bedingt ist. Durch die seitliche Abflachung der Gemischwolke 9 ist diese optimal an die Form des Brennraums 7 angepaßt.

Die zwischen dem maximalen Öffnungswinkel α und dem minimalen Öffnungswinkel β liegenden Strahlwinkel können dann unter Verwendung beliebig vieler einzelner Einspritzstrahlen 10 kontinuierlich an die Extremwerte herangeführt werden. In Fig. 3 ist beispielhaft eine Gemischwolke 9 aus zehn einzelnen Einspritzstrahlen 10 dargestellt. Dabei wird der maximale Öffnungswinkel α nicht angenommen, sondern nur durch zwei danebenliegende Einspritzstrahlen 10 angenähert. Eine solche Anordnung kann beispielsweise von Vorteil sein, wenn zwei seitlich vom Dachfirst angeordnete Zündkerzen 4 vorgesehen sind, die zur Vermeidung der Thermoschockbelastung nicht direkt angespritzt werden sollen.

Liegt die Zündkerze 4 beispielsweise in der "Dachschräge", wird der minimale Öffnungswinkel β nicht angenommen, sondern ebenfalls durch zwei danebenliegende Einspritzstrahlen angenähert.

Unter Verwendung beliebig vieler Abspritzöffnungen des Brennstoffeinspritzventils 5 können beliebige Anordnungen von Einspritzstrahlen 10 erzeugt werden. Strahlabstandswinkel γ der einzelnen Einspritzstrahlen 10 zueinander können gleich oder unterschiedlich sein. Dabei ist die Auslegung der Strahlabstandswinkel γ unabhängig von der Auslegung der Öffnungswinkel α und β der Gemischwolke 9.

Die Erfindung ist nicht auf das dargestellte Ausführungsbeispiel beschränkt und z. B. auch für Brennstoffeinspritzsysteme 2 mit mehr oder weniger Einspritzstrahlen 10, Gaswechselventile 11, 12 und insbesondere mehreren Zündkerzen 4 sowie variablen Hubraumvolumina anwendbar.

## Patentansprüche

1. Brennstoffeinspritzsystem (2) für Brennkraftmaschinen (1) mit mindestens einem Brennstoffeinspritzventil (5), das Brennstoff in einen Brennraum (7) einspritzt, der von einer Zylinderwandung (13) begrenzt ist, in der ein Kolben (6) geführt ist, und mit einer in den Brennraum (7) ragenden Zündkerze (4), wobei das Brennstoffeinspritzventil (5) mehrere Einspritzstrahlen (10) in den Brennraum (7) einspritzt,
wobei die Einspritzstrahlen (10) eine kegelförmige Gemischwolke (9) in dem Brennraum (7) erzeugen, welche einen elliptischen Querschnitt aufweist, und
wobei der Brennraum (7) als Dachbrennraum (7) in einem Zylinderkopf (3) ausgeführt ist, welcher Firstschrägen (15) und einen First (16) aufweist, wobei das Brennstoffeinspritzventil (5) an dem von den Firstschrägen (15) begrenzten First (16) des Zylinderkopfes (3) angeordnet ist und die Zündkerze (4) seitlich vom First (16) in einer der Firstschrägen angeordnet ist.

2. Brennstoffeinspritzsystem nach Anspruch 1,
**dadurch gekennzeichnet,**
**dass** die Gemischwolke (9) in einer Längsrichtung der Brennkraftmaschine (1) einen Öffnungswinkel α aufweist, dass die Gemischwolke (9) in einer Querrichtung der Brennkraftmaschine (1) einen Öffnungswinkel β aufweist und dass der Öffnungswinkel α in der Längsrichtung der Brennkraftmaschine (1) größer ist als der Öffnungswinkel β in der Querrichtung der Brennkraftmaschine (1).

3. Brennstoffeinspritzsystem nach Anspruch 2,
**dadurch gekennzeichnet,**
**dass** die Einspritzstrahlen (10), die zwischen den unter den Öffnungswinkeln α und β eingespritzten Einspritzstrahlen (10) liegen, sich den Öffnungswinkeln α und β kontinuierlich annähern.

4. Brennstoffeinspritzsystem nach Anspruch 2 oder 3,
**dadurch gekennzeichnet,**
**dass** der minimale Öffnungswinkel β entlang von Firstschrägen (15) ausgerichtet ist.

5. Brennstoffeinspritzsystem nach einem der Ansprüche 1 bis 4,
**dadurch gekennzeichnet,**
**dass** Strahlabstandswinkel γ zwischen den einzelnen Einspritzstrahlen (10) gleich groß sind.

6. Brennstoffeinspritzsystem nach einem der Ansprüche 1 bis 4,
**dadurch gekennzeichnet,**
**dass** Strahlabstandswinkel γ zwischen den einzelnen Einspritzstrahlen (10) unterschiedlich groß sind.

7. Brennstoffeinspritzsystem nach einem der Ansprüche 1 bis 6,
**dadurch gekennzeichnet,**
**dass** die Einspritzstrahlen (10) so ausgerichtet sind, dass sie tangential zur Zündkerze (4) und im Zylinderkopf (3) angeordneten Gaswechselventilen (11, 12) ausgerichtet sind.

## Claims

1. Fuel injection system (2) for internal combustion engines (1) having at least one fuel injection valve (5) which injects fuel into a combustion chamber (7) which is bounded by a cylinder wall (13) in which a piston (6) is guided, and having a spark plug (4) which projects into the combustion chamber (7), the fuel injection valve (5) injecting a plurality of injection jets (10) into the combustion chamber (7),
the injection jets (10) generating a conical mixture cloud (9), which has an elliptical cross section, in the combustion chamber (7), and
the combustion chamber (7) being embodied as a roof combustion chamber (7) in a cylinder head (3) which has roof ridge slopes (15) and a roof ridge (16),
the fuel injection valve (5) being arranged on the roof ridge (16), bounded by the roof ridge slopes (15), of the cylinder head (3), and the spark plug (4) being arranged to the side of the roof ridge (16) in one of the roof ridge slopes.

2. Fuel injection system according to Claim 1, **characterized in that** the mixture cloud (9) has an angle α of aperture in a longitudinal direction of the internal combustion engine (1), **in that** the mixture cloud (9) has an angle β of aperture in a transverse direction of the internal combustion engine (1) and **in that** the angle α of aperture is greater in the longitudinal direction of the internal combustion engine (1) than the angle β of aperture in the transverse direction of the internal combustion engine (1).

3. Fuel injection system according to Claim 2, **characterized in that** the injection jets (10) which are located between the injection jets (10) which are injected at the angles α and β of aperture continuously approach the angles α and β of aperture.

4. Fuel injection system according to Claim 2 or 3, **characterized in that** the minimum angle β of aperture is oriented along roof ridge slopes (15).

5. Fuel injection system according to one of Claims 1 to 4, **characterized in that** jet spacing angles γ between the individual injection jets (10) are of equal magnitude.

6. Fuel injection system according to one of Claims 1 to 4, **characterized in that** jet spacing angles γ between the individual injection jets (10) are of different magnitude.

7. Fuel injection system according to one of Claims 1 to 6, **characterized in that** the injection jets (10) are oriented in such a way that they are oriented tangentially with respect to the spark plug (4) and gas exchange valves (11, 12) arranged in the cylinder head (3).

## Revendications

1. Système d'injection de carburant (2) pour des moteurs à combustion interne (1) dans lequel :
- au moins un injecteur (5) injecte le carburant dans une chambre de combustion (7) limitée par une paroi de cylindre (13) guidant un piston (6), et dans laquelle pénètre une bougie d'allumage (4),
- l'injecteur (5) injecte plusieurs jets (10) dans la chambre de combustion (7), en y produisant un nuage de mélange (9) ayant la forme d'un cône à section elliptique,
- la chambre de combustion (7) est une chambre en toit réalisée dans une culasse (3) avec un faîte (16) et des pentes de toit (15),
- l'injecteur (5) est monté sur le faîte (16), délimité par les pentes de toit (15), de la culasse (3), et la bougie d'allumage (4) est disposée latéralement par rapport au faîte (16) dans une des pentes de toit.

2. Système d'injection de carburant selon la revendication 1,
**caractérisé en ce que**
le nuage de mélange (9) présente selon la direction longitudinale du moteur (1) un angle d'ouverture α, et selon la direction transversale du moteur, un angle d'ouverture β, l'angle α étant supérieur à l'angle β.

3. Système d'injection de carburant selon la revendication 2,
**caractérisé en ce que**
les jets d'injection (10) qui se trouvent entre les jets d'injection (10) effectués sous les angles d'ouverture α et β, présentent des angles qui se rapprochent en continu des angles d'ouverture α et β.

4. Système d'injection de carburant selon la revendication 2 ou 3,
**caractérisé en ce que**
l'angle d'ouverture minimale β est dirigé selon le long des pentes de toit (15).

5. Système d'injection de carburant selon une des revendications 1 à 4,
**caractérisé en ce que**
les espacements angulaires γ entre les jets d'injection individuels (10) sont égaux.

6. Système d'injection de carburant selon une des revendications 1 à 4,
**caractérisé en ce que**
les espacements angulaires γ entre les jets d'injection individuels (10) sont différents.

7. Système d'injection de carburant selon une des revendications 1 à 6,
**caractérisé en ce que**
les jets d'injection (10) sont dirigés tangentiellement à la bougie d'allumage (4) et aux soupapes d'échange de gaz (11, 12) existant dans la culasse (3).
